(19) Europäisches Patentamt
European Patent Office
Office européen des brevets

(11) EP 2 216 522 A1

(12) EUROPEAN PATENT APPLICATION

(43) Date of publication:
11.08.2010 Bulletin 2010/32

(51) Int Cl.:
F01N 3/035 (2006.01)          F01N 11/00 (2006.01)
F02D 41/02 (2006.01)          F02D 41/40 (2006.01)

(21) Application number: 09152180.7

(22) Date of filing: 05.02.2009

(84) Designated Contracting States:
AT BE BG CH CY CZ DE DK EE ES FI FR GB GR
HR HU IE IS IT LI LT LU LV MC MK MT NL NO PL
PT RO SE SI SK TR
Designated Extension States:
AL BA RS

(71) Applicant: Delphi Technologies Holding S.à.r.l.
4940 Bascharage (LU)

(72) Inventors:
• Parmentier, Michael
6747 Chatillon (BE)

• Schmitt, Julien
57970 Kuntzig (FR)

(74) Representative: Gregory, John David Charles et al
Delphi Diesel Systems
Patent Department
Courteney Road
Gillingham
Kent ME8 0RU (GB)

(54) On-board vehicle diagnostic of an oxidation catalyst

(57) There is presented a method for monitoring an oxidation catalyst in an exhaust line of an internal combustion engine, wherein a catalyst diagnostic event comprises a test cycle during which a conversion capability of the oxidation catalyst is determined based on the exotherm generated by post-injection of fuel. The diagnostic event may only be initiated when the temperature of the oxidation catalyst lies within a predetermined temperature range.

FIG. 1

**Description**

FIELD OF THE INVENTION

The present invention generally relates to on-board diagnostics, and more particularly to a method for monitoring the performance of an oxidation catalyst in the exhaust-line of an internal combustion engine.

BACKGROUND OF THE INVENTION

Catalytic converters are now conventionally featured on exhaust systems of automotive vehicles to purify the engine exhaust gases. In diesel engines for example, the most commonly used catalytic converter is the diesel oxidation catalyst (DOC), typically associated with a Diesel Particulate Filter (DPF). Its main function is to convert hydrocarbons (HC) in the exhaust gas stream to water ($H_2O$) and carbon dioxide ($CO_2$). These converters often reach 90% effectiveness, virtually eliminating diesel odor and helping to reduce visible particulates (soot).

The need for catalytic converters, especially on motor vehicles, increases with the increasingly stringent environmental protection regulations in many countries. Also, with the upcoming EURO V and VI regulations, the on-board diagnostic of DOCs becomes mandatory for a large number of vehicles. Such diagnostic consists in determining the performance, i.e. conversion efficiency, of the catalyst to detect whether the catalyst is still able to purify the exhaust gas according to the regulations, or whether it is too old/damaged and should be replaced.

Indeed, over the long term, in other words over an average mileage on the order of 100 000 km or an average operating time on the order of 1 000 hours in the case of a motor vehicle engine, the capacity of a catalytic converter to convert the pollutant decreases steadily. That process is called "ageing" and it is caused by manifold physical and chemical environmental factors, which are unavoidable no matter how carefully the catalytic converter is handled. The process of ageing depends to a great extend on the strain to which the catalytic converter is exposed in its typical operation. Another phenomenon that may alter the conversion efficiency of a catalytic converter is "poisoning", e.g. if a fuel of poor quality is used.

Due to such usage-specific ageing of catalytic converters, it is virtually impossible to make general predictions regarding the durability of a catalytic converter. Further, general guidelines, if any, on the length of time in use or the mileage after which a catalytic converter would have to be replaced, would have to be especially stringent to in order to prevent inactive catalytic converters from continuing to be used. But this would obviously imply replacing, for the sake of prevention, catalytic converters that are still significantly useable.

The remedy for this situation is thus the monitoring of the functional capability of each catalytic converter that is carried out over the long term and is reliable.

In diesel engines, on-board diagnostics of the DOC are typically based on the exotherm generated by a post-injection (i.e. the injection of fuel during the exhaust stroke). The post-injection increases the amount of uncombusted HC in the exhaust stream, which will be converted in the DOC into water and $CO_2$. This conversion involves exothermic oxidation reactions that produce an amount of heat that is directly linked to the pre-DOC concentration (i.e. the amount of HC entering the DOC). As it is known to those skilled in the art, it is this exotherm generation that is used in the regeneration of diesel particulate filters (DPF) to increase the temperature of the exhaust gases in order to burn the accumulated soot.

Accordingly, the DOC diagnostic in a diesel engine is typically performed during the regeneration mode of the DPF, which implies a combustion mode with post-injection. The typical conversion efficiency diagnostic consists in monitoring the exotherm of the DOC by comparing the pre- and post-DOC temperatures of the exhaust gases, and thus check whether a post-injection actually causes an increase in the exhaust-gases downstream of the DOC. Performing the diagnostic during a DPF regeneration mode also ensures that the DOC is at a relatively high temperature, since a minimum temperature of the DOC is required for enabling the conversion.

OBJECT OF THE INVENTION

The object of the present invention is to provide an alternative method of monitoring an oxidation catalyst that permits a reliable, long term monitoring of the catalyst conversion efficiency.

SUMMARY OF THE INVENTION

The present invention is based on the observation that when the diagnostic of a catalytic converter is performed in a high temperature range thereof, as is typically the case during a regeneration event, there is a risk of erroneous assessment. The reason for this is that an (highly) aged catalytic converter can still have a good efficiency in the high temperature range and be inefficient in a colder temperature range of an emission test cycle. Therefore, a regeneration event with a high DOC temperature and/or a high temperature of engine-out exhaust gases cannot be used to safely diagnose a DOC.

To overcome these drawbacks, the present invention proposes a method as claimed in claim 1.

The present invention relates to a method for monitoring an oxidation catalyst in an exhaust line of an internal combustion engine, wherein a catalyst diagnostic event comprises a test cycle during which a conversion capability of the oxidation catalyst is determined based on the exotherm generated by post-injection of fuel. According to an important aspect of the invention, the diagnostic event may only be initiated when the temperature of the oxidation catalyst lies within a predetermined temperature range.

The predetermined temperature range is advantageously selected to be able to discriminate between a new or mildly aged catalyst and an aged catalyst, and should thus cover a temperature range for which it is expected that the conversion efficiency of a highly aged catalyst will be sensibly below that of a more recent, functional catalyst (i.e. operating satisfactorily).

An alert signal may then be triggered when the conversion efficiency drops below a conversion efficiency alert threshold.

In one embodiment, the predetermined temperature range is selected to correspond to a transition zone of the conversion efficiency for a reference oxidation catalyst with given ageing. In other words, the predetermined temperature range is preferably selected to correspond to a temperature range where the conversion efficiency of the reference oxidation catalyst with a selected ageing is less than 100%, and more preferably has a conversion efficiency sensibly lower than that of a less aged, functional oxidation catalyst. As it will be understood, the values of conversion efficiency values at different temperatures for the reference oxidation catalyst are calibrated and determined by experimentation.

More preferably, the upper temperature limit of the predetermined temperature range corresponds to a conversion efficiency of no more than 90% for the aged, reference oxidation catalyst.

In a preferred embodiment, the predetermined temperature range is selected so that its lower and upper temperature limits correspond to a conversion efficiency of about 40 to 80%, respectively, for an aged, reference oxidation catalyst, more preferably 40 to 60%.

Preferably, a further criterion for the lower temperature limit of the predetermined temperature range is that it shall at least correspond to a predetermined conversion efficiency of a functional oxidation catalyst (with given ageing), which is preferably of at least 50 %.

As it will be understood, the present diagnostic event is advantageously performed when the engine is not operated in a DPF regeneration mode.

For increased accuracy of the diagnostic event, the latter is cancelled in case the temperature of the oxidation catalyst exits the predetermined temperature range.

Also for enhanced accuracy, the oxidation catalyst temperature may be monitored by means of a multi-slice model, and the diagnostic event may only be triggered and/or performed when the respective temperatures of all of said slices lie within the predetermined temperature range.

Further, during the diagnostic cycle the engine parameters may advantageously be set to minimize the amount of HC in the engine-out exhaust gases, except for the post injection.

According to one embodiment, the measured exotherm is determined by monitoring the temperature of exhaust gases exiting the oxidation catalyst for a given time period after a post-injection.

## BRIEF DESCRIPTION OF THE DRAWINGS

The present invention will now be described, by way of example, with reference to the accompanying drawings, in which:

FIG. 1: is a graph showing the effects of ageing on catalyst efficiency;

FIG. 2: is a graph showing the measured DOC-out exhaust gas temperature ($T_{out}$) and the model exhaust gas temperature without post-injection ($T_{out-mod}$).

## DETAILED DESCRIPTION OF A PREFERRED EMBODIMENT

The present method will now be explained with respect to a preferred embodiment applied to the field of diesel oxidation catalysts (DOC).

As it is known to those skilled in the art, DOCs are now commonly found in the exhaust system of diesel motor vehicles. They are often arranged upstream of a diesel particulate filter (DPF) for assisting in the regeneration thereof. Indeed, in order to eliminate soot particles collected in a DPF, it is conventional to increase the temperature of the exhaust gases by operating the engine in an adapted combustion mode involving (1) split and retarded fuel injections;

and (2) performing post-injection to increase the amount of unburned HC in the exhaust gases. The unburned HC undergoes in the DOC exothermic oxidation reactions, and is converted into water and carbon dioxide.

As explained above, it is desirable to monitor the conversion performance of the DOC. Conventional DOC diagnostic is performed during DPF regeneration events and based on the exothermic effect of the DOC caused by post-injection. While performing the DOC diagnostic event during a regeneration event ensures that the DOC temperature will be above the minimum temperature required for enabling the catalyst material, there is a risk of erroneous assessment.

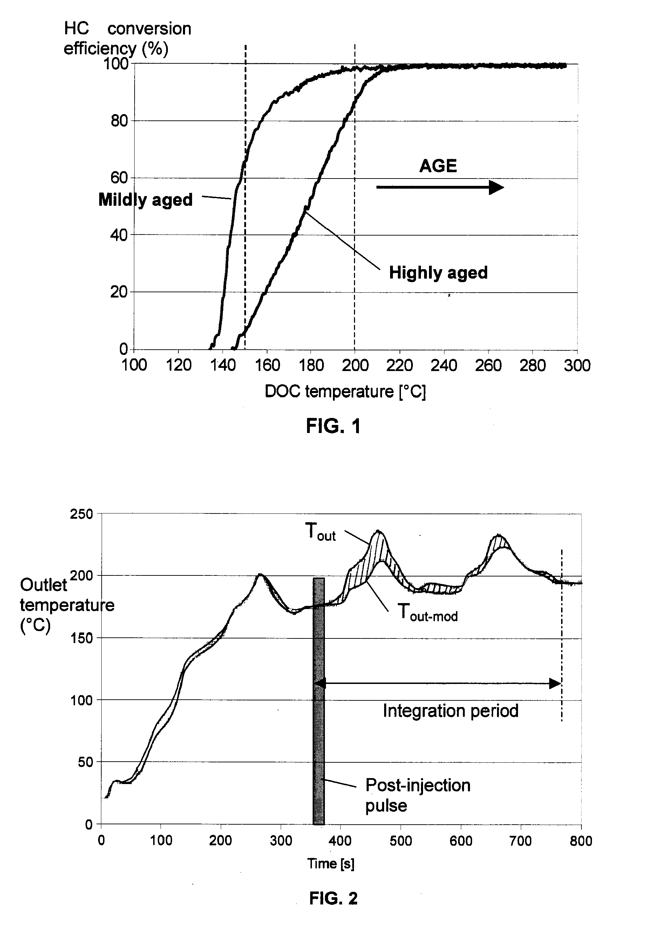

This problem can be better understood from Fig. 1, which shows the effect of ageing on a DOC, the HC conversion efficiency being plotted vs. DOC temperature. As it can be seen, an aged catalytic converter can still have a good efficiency in the high temperature range (e.g. typically above 300°C for many DOCs). However, the highly aged catalyst clearly has a worse or unacceptable conversion efficiency at lower temperatures (e.g. below 250°C).

To ensure a reliable, long term monitoring of catalytic converters, namely DOCs, the present method proposes to perform the DOC diagnostic event at lower or moderate temperatures, where it is actually possible to assess the ageing status of the DOC and not simply whether it is broken or not. In the case of the ageing behaviour shown in Fig. 1, the temperature window during which the diagnostic event can be formed in accordance with the present method is e.g. 150 to 200°C.

Therefore, the diagnostic event is preferably performed when the engine is operated normally (normal combustion mode, e.g. lean burn) but not in a regeneration mode of DPF that causes high temperature exhaust gases and thus brings the DOC in the high temperature range.

The DOC temperature is preferably monitored according to a multi-sliced model, i.e. the DOC is virtually divided into multiples slice and an algorithm is used to determine the temperature in each slice based on one or more temperature measurements of the DOC.

In the present method, the oxidation catalyst diagnostic event is thus performed when the DOC is in the predetermined temperature window, as explained above. This temperature window will typically be calibrated based on experimental testing, simulation, forced ageing test, etc. for a given make and type of catalyst.

The diagnostic event involves the following test cycle. While it has been checked that the DOC temperature is within the prescribed window, and that the engine is not operated in a DPF regeneration mode or other rich combustion mode, a post-injection of a metered quantity of fuel is performed. As it is used herein, the term post-injection designates the injection of fuel either in-cylinder or in the exhaust piping, before the DOC, at a timing where no or little combustion occurs. In-cylinder post injection may typically be executed towards the end of the power stroke (or later),. However, as compared to the post-injection traditionally performed in DPF regeneration mode, the amount of fuel that is injected in the post-injection pulse is comparatively smaller. Indeed, the objective is not to actually bring the DOC in the high temperature range, but to monitor the consequence of the post-injection and check whether it results in the expected exotherm or not. Hence, typically a small quantity of post fuel (e.g. a few grams) is injected to generate a temporary exotherm in the DOC.

As soon as the post-injection has been peformed, the heat generated by the DOC is accumulated (taken into account by the algorithm implementing the test cycle). This is preferably done by measuring the temperature of the exhaust gases at the DOC outlet (or downstream thereof). When all the heat stored in the DOC has been evacuated in the exhaust gases, the heat accumulation stops and is compared to the theoretical heat that the post fuel should have produced. The conversion efficiency is then calculated as the ratio of the accumulated heat to the theoretical heat that the post fuel should have produced.

To evaluate the exotherm, we consider that the instantaneous total heat energy of the exhaust gases that exit the DOC corresponds to the sum of the heat energy of the exhaust gases that enter the DOC and the heat energy due to the exotherm that is linked to the injected fuel quantity, however corrected by a term representative of transients namely taking into account the thermal inertia of the DOC. This instantaneous heat energy balance of the DOC can be expressed as follows:

$$\dot{m} \cdot Cp \cdot T_{out} = \dot{m} \cdot Cp \cdot T_{in} + \dot{q}_f \cdot H \cdot \eta - \frac{dQ_{DOC\_stored}}{dt} \qquad (1)$$

where

$T_{in}$: represents the exhaust gas temperature at the DOC inlet;

$T_{out}$: represents the exhaust gas temperature at the DOC outlet;

η: is the DOC conversion efficiency;

$m$: represents the mass flow of the exhaust gases;

$Cp$: represents the heat capacity of the exhaust gases;

$q_f$: represents the fuel quantity introduced in the exhaust gases by the post fuel injection;

$Q_{DOC-stored}$: is the heat energy stored in the DOC material;

$H$: is the fuel heating value.

When integrating it over a time period t, relation (1) is equivalent to:

$$\eta = \frac{\sum \dot{m} \cdot Cp \cdot (T_{out} - T_{out-mod})}{q_f \cdot H} \qquad (2)$$

Where $T_{out-mod}$ represents a model DOC-out exhaust gas temperature of an "inert" DOC, i.e. when no post-injection is performed and thus typically without exotherm. It may be noted that in this mathematical approach, $T_{out-mod}$ is equivalent to a stabilized $T_{in}$; and $_{qf}H$ corresponds to the theoretical exotherm.

The principle of this integration is illustrated in Fig.2, wherein the measured exhaust gas temperature $T_{out}$ and the modeled exhaust gas temperature without post-injection $T_{out-mod}$ are plotted vs. time. The integration is started with the post injection pulse and performed until all the heat accumulated in the DOC is eliminated.

In order to provide an accurate result of the efficiency, the exact amount of fuel entering the DOC $(q_f)$ must be known and is thus precisely metered. For an enhanced accuracy, the post fuel injected is preferably corrected for engine-out temperature and exhaust flow, using e.g. a calibratable correction factor.

Also, to avoid noise due to engine-out HC amounts that are not induced by post injection, the EGR rate (Exhaust Gas Recirculation) for cars equipped with an EGR valve permitting to recirculate part of the exhaust gases back to the intake manifold, is preferably reduced to a predetermined value during the diagnostic event. Also, any other parameter that may affect the engine-out HC concentration, e.g. swirl in the combustion chamber, is preferably set, for the duration of the diagnostic event, to a predetermined value that minimizes the engine-out HC.

It remains to be noted that usual oxidation catalyst technologies are based on zeolites, which have a substantial HC storing effect at low temperature (typically <250°C). To avoid unknown accumulation of HC in the DOC prior to a diagnostic event, the start of the diagnostic event is prevented when the DOC has been running more than a predetermined time period below a predetermined temperature threshold. This may typically be the case if the engine has been running idle for a while. A diagnostic event may subsequently be started when it is observed that the DOC temperature has increased above the temperature threshold, provided the other required conditions are met.

Besides, for a reliable DOC performance monitoring, the diagnostic event is preferably cancelled if the DOC temperatures goes out of the diagnostic temperature window.

Referring now more specifically to the selection of the diagnostic temperature window, the idea is to operate the diagnostic in a DOC temperature window where an aged, namely a highly aged catalyst cannot be assessed as less aged catalyst. In practice this implies determining the limits of the diagnostic temperature window based on a highly aged catalyst that serves as a reference (reference oxidation catalyst). The upper limit of the window should be selected to correspond to a conversion efficiency below 100% of the reference catalyst, preferably below 90%. In the example of Fig.1, this means a upper limit for the time window of 200°C. The lower limit may be, as already mentioned 150°C, which is a temperature at which conversion is enabled, although quite low. An additional criterion for selecting the lower limit may be that the temperature is sufficient for a functional oxidation catalyst, e.g. as the mildly aged catalyst of Fig. 1, to reach the light-off point, i.e. a conversion efficiency of 50% (which is the case here at 150°C).

In an alternative, preferred embodiment, the diagnostic temperature window may be selected to correspond to a conversion efficiency ranging from 40 to 60% for the reference, highly aged catalyst. Applying this to Fig.1, it can be deduced from the curve of the highly aged catalyst (reference) that the corresponding diagnostic temperature window is 170°C to 185°C. As it can be seen, this temperature range corresponds to a steep transition zone of the conversion efficiency of this reference (highly aged) catalyst. It is notably remote from the conversion efficiency curve of the mildly aged catalyst.

Still with reference to the example of Fig.1, if the determined conversion efficiency is below 40% in this predetermined diagnostic temperature window (170-185°C), then it is concluded that the oxidation catalyst needs to be replaced and an alert signal is generated.

The present method can be easily implemented in the ECU of an internal combustion engine and does not require additional, specific equipment (for most engines/vehicles).

**Claims**

1. Method for monitoring an oxidation catalyst in an exhaust line of an internal combustion engine, wherein a catalyst diagnostic event comprises a test cycle during which a conversion capability of said oxidation catalyst is determined based on the exotherm generated by post-injection of fuel,
   **characterized in that**
   said diagnostic event may only be initiated when the temperature of said oxidation catalyst lies within a predetermined temperature range.

2. Method according to claim 1, wherein said predetermined temperature range is selected to correspond to a transition zone of the conversion efficiency for a reference oxidation catalyst with given ageing.

3. Method according to claim 1 or 2, wherein said predetermined temperature range is selected so that the upper temperature limit corresponds to a conversion efficiency of no more than 90% for an aged, reference oxidation catalyst.

4. Method according to any one of the preceding claims, wherein said predetermined temperature range is selected so that the lower and upper temperature limits correspond to a conversion efficiency of about 40 to 80%, respectively, for an aged, reference oxidation catalyst, preferably 40 to 60%.

5. Method according to any one of the preceding claims, wherein the lower temperature of said predetermined temperature range is selected to at least correspond to a predetermined conversion efficiency of a functional, reference oxidation catalyst, said predetermined conversion efficiency being preferably of at least 50 %.

6. Method according to any one of the preceding claims, wherein said diagnostic event is performed when the engine is not operated in a DPF regeneration mode.

7. Method according to any one of the preceding claims, wherein said diagnostic event is cancelled in case the temperature of said oxidation catalyst exits said predetermined temperature range.

8. Method according to any one of the preceding claims, wherein the oxidation catalyst temperature is monitored by means of a multi-slice model, and said diagnostic event may only be triggered and/or performed when the respective temperatures of all of said slices lie within said predetermined temperature range.

9. Method according to any one of the preceding claims, wherein said measured exotherm is determined by monitoring the temperature of exhaust gases exiting said oxidation catalyst for a given time period after a post-injection.

10. Method according to any one of the preceding claims, wherein during said diagnostic cycle engine parameters are set to minimize the amount of HC in the engine-out exhaust gases, except for the post injection.

11. Method according to any one of the preceding claims, wherein an alert signal is triggered when said conversion efficiency drops below a conversion efficiency alert threshold.

**FIG. 1**

**FIG. 2**

Europäisches
Patentamt

European
Patent Office

Office européen
des brevets

# EUROPEAN SEARCH REPORT

Application Number

EP 09 15 2180

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | FR 2 914 693 A (RENAULT SAS [FR]) 10 October 2008 (2008-10-10) | 1-7,9-11 | INV. F01N3/035 F01N11/00 F02D41/02 F02D41/40 |
| Y | * page 7, line 1 - page 12, line 3; figures * ----- | 8 | |
| Y | FR 2 877 043 A (RENAULT SAS [FR]) 28 April 2006 (2006-04-28) * abstract * ----- | 8 | |
| X | EP 1 154 131 A (MAZDA MOTOR [JP]) 14 November 2001 (2001-11-14) * abstract * * paragraph [0034] * ----- | 1 | |

TECHNICAL FIELDS
SEARCHED      (IPC)

F01N
F02D

The present search report has been drawn up for all claims

| Place of search | Date of completion of the search | Examiner |
|---|---|---|
| Munich | 13 August 2009 | Torle, Erik |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

...............................................................................
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 09 15 2180

This annex lists the patent family members relating to the patent documents cited in the above-mentioned European search report.
The members are as contained in the European Patent Office EDP file on
The European Patent Office is in no way liable for these particulars which are merely given for the purpose of information.

13-08-2009

| Patent document cited in search report | | Publication date | Patent family member(s) | Publication date |
|---|---|---|---|---|
| FR 2914693 | A | 10-10-2008 | NONE | |
| FR 2877043 | A | 28-04-2006 | AT         386194 T | 15-03-2008 |
| | | | DE 602005004815 T2 | 19-02-2009 |
| | | | EP        1807615 A1 | 18-07-2007 |
| | | | WO     2006045975 A1 | 04-05-2006 |
| | | | JP     2008518153 T | 29-05-2008 |
| | | | KR   20070072619 A | 04-07-2007 |
| | | | US     2009133483 A1 | 28-05-2009 |
| EP 1154131 | A | 14-11-2001 | DE       60108995 D1 | 31-03-2005 |
| | | | DE       60108995 T2 | 21-07-2005 |
| | | | JP     2001263048 A | 26-09-2001 |

EPO FORM P0459

For more details about this annex : see Official Journal of the European Patent Office, No. 12/82